# EUROPEAN PATENT APPLICATION

(11) **EP 1 736 401 A1**
(43) Date of publication of application: **27.12.2006**
(21) Application number: 06114664.3
(22) Date of filing: 30.05.2006
(51) Int. Cl.: B62M 1/00, B62K 3/00, B63H 16/08

(54) **Muscle-powered vehicle**

(30) Priority: 15.06.2005 IT PD20050181
(71) Applicant: Pasqualin, Giorgio Giuliano, 35127 Padova (IT)
(72) Inventor: Pasqualin, Giorgio Giuliano, 35127 Padova (IT)
(74) Representative: Modiano, Micaela Nadia

(57) **Abstract**

A muscle-powered vehicle, comprising a treadmill (11,111), which is supported by a chassis (18,118) and is adapted to be actuated by the thrust of the feet and legs of at least one user (12,112) who walks or runs thereon; means for travel (22,130) over land or on water are functionally connected to the treadmill (11,111) by way of motion transmission means (19,20); the vehicle (10,110) is provided with steering means for directing its travel.

## Description

The present invention relates to a muscle-powered vehicle.

So-called home fitness, i.e., the set of gymnastic activities that can be conveniently performed in one's own home, is now becoming increasingly popular.

One of the most widely used implements for complete exercise at home is the treadmill, thanks to the many advantages in terms of health and well-being that can be obtained by using it, such as for example the acquisition of muscular tone for the lower limbs (legs, calves and buttocks), the improvement of blood circulation and of cardiac and respiratory efficiency, and the reduction of fatty tissue.

However, although the treadmill allows to perform physical activity at any time of day, including when it is raining, when it is too cold or too hot, and therefore in general if the climate is not ideal, or when it is too dark (or even in the latest hours of the day), on the other hand the use of the treadmill is relegated indeed to a closed or open environment which does not change, indeed because of the inherent characteristic of stationarity of the implement.

The aim of the present invention is to provide a muscle-powered vehicle which can be moved by way of the physical activity generally performed on a treadmill.

Within this aim, an object of the present invention is to provide a muscle-powered vehicle which can travel over land.

Another object of the present invention is to provide a muscle-power vehicle suitable for navigation.

Another object of the present invention is to provide a muscle-powered vehicle which allows to obtain all the advantages that cause treadmills to be appreciated and widespread, such as for example the acquisition of muscular tone for the lower limbs (legs, calves and buttocks), the improvement of blood circulation, of cardiac and respiratory efficiency, and the reduction of fatty tissue.

Another object of the present invention is to provide a muscle-powered vehicle which can be used easily in full safety even by a user who does not have particular prior training.

Another object of the present invention is to provide a muscle-powered vehicle which can be manufactured cheaply with known systems and technologies.

This aim and these and other objects, which will become better apparent hereinafter, are achieved by a muscle-powered vehicle, characterized in that it is constituted by a treadmill which is supported by a chassis and is adapted to be actuated by the thrust of the feet and legs of at least one user who walks or runs thereon, means for travel over land or on water being functionally connected to the treadmill by way of motion transmission means, said vehicle being provided with steering means for directing its travel.

Further characteristics and advantages of the invention will become better apparent from the following detailed description of a preferred but not exclusive embodiment thereof, illustrated by way of non-limiting example in the accompanying drawings, wherein:
Figure 1 is a schematic side view of a vehicle according to the invention in a first embodiment;
Figure 2 is a partially sectional top view of a vehicle according to the invention in the first embodiment of Figure 1;
Figure 3 is a schematic side view of a vehicle according to the invention in a second embodiment thereof;
Figures 4 to 6 are top views of three variations of the second embodiment of the vehicle according to the invention as shown in Figure 3.

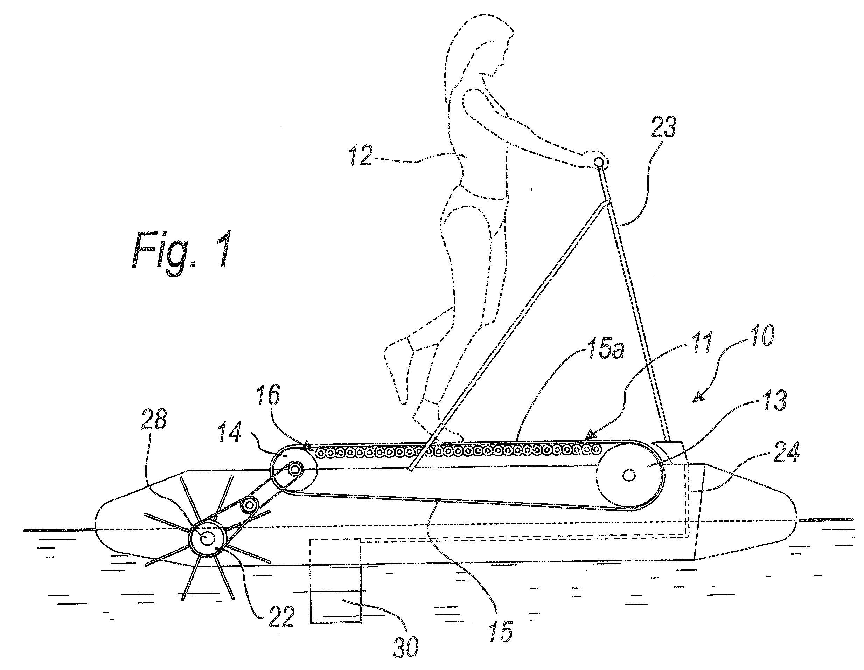

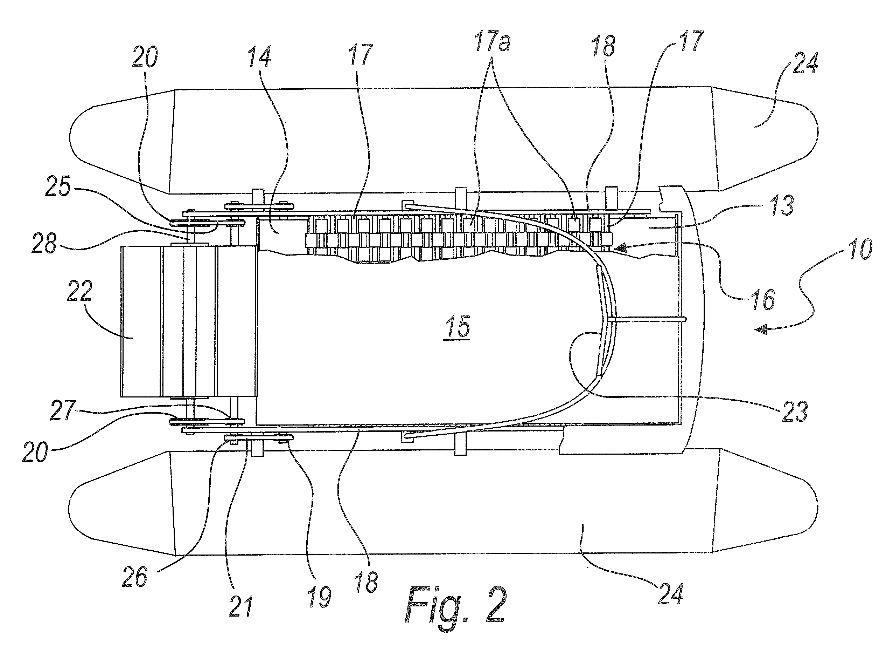

With reference to the figures, a muscle-powered vehicle according to the invention is generally designated by the reference numeral 10 in the first embodiment of Figures 1 and 2.

The muscle-powered vehicle 10 comprises a treadmill 11, which is supported by a chassis 18 and is adapted to be actuated by the thrust of the feet and legs of a user 12 who walks or runs on it.

Travel means for travel over land or on water are provided that are functionally connected to the treadmill 11 by way of motion transmission means.

The vehicle 10 is provided with guiding (steering) means for directing its travel.

The treadmill 11 is constituted by two rollers, a first front roller 13, relative to the travel direction of the vehicle, and a second rear roller 14.

The two rollers 13 and 14 are surrounded by a walkable belt 15, which is stretched between the rollers.

An upper portion 15a of the belt 15 slides over a supporting surface 16 for the user 12, who walks or runs thereon.

The belt 15 transmits its motion, imparted by the thrust of the feet of the user 12, to the two front and rear rollers 13 and 14.

The supporting surface 16 is provided by a plurality of contiguous bars 17, each of which is provided with a series of free rollers 17a, the set of which forms a surface which allows the sliding of the belt 15 and provides support for the user 12.

The two rollers 13 and 14 and the supporting surface 16 are supported by the chassis 18, to which the travel means and the guiding means are also rigidly coupled.

The motion transmission means are of the flexible type and comprise at least one driving pulley or wheel 19, which is rigidly coupled to the rotation shaft of the rear roller 14, and a corresponding driven pulley 20, which is associated with the movement means and is adapted to receive the driving torque by means of a flexible transmission element, such as a belt, chain or other equivalent element.

In the example of the first embodiment of the invention described here, the vehicle 10 is a watercraft and comprises a floating structure which is fixed to the chassis 18.

The travel means for moving the vehicle 10 are formed by a propulsion impeller 22.

The guiding means are constituted by a handlebar 23 for steering a rudder 30.

The floating structure is provided with two longitudinally elongated lateral floats 24.

In this first watercraft-like embodiment of the vehicle 10 according to the invention, the motion transmission means comprise a first flexible torque transmission element 21, such as a belt, between a first driving pulley 19 and a first intermediate pulley 26, and a second torque flexible transmission element 25, such as a second belt, between a second intermediate pulley 27, which is coaxial and rigidly coupled to the first intermediate pulley 26, and a driven pulley 20, which is keyed to the actuation shaft 28 of the impeller 22.

The user 12 who runs on the belt 15, whose width is such as to allow the running of one or more users, moves, by means of the rear roller 14, the first belt 21 and, by means of the second belt 25, the impeller 22, producing the advancement of the vehicle 10 in water.

The rollers 13 and 14 are conveniently rigidly coupled to the respective shafts with the interposition of freewheel devices, which are suitable to prevent the user of the vehicle 10, when he/she stops walking or running, from being dragged by the belt 15, which is kept in motion by the inertia of the impeller 22.

As an alternative, the vehicle 10 can lack the freewheel devices, so that backward running motion makes the vehicle 10 travel in the opposite direction.

Figure 2 illustrates two driving pulleys 19, two first belts 21, two first intermediate pulleys 26, two second intermediate pulleys 27, and two driven pulleys 20 with two second belts 25.

This configuration allows to obtain a balanced transmission of torque from the rear roller 14 and the impeller 22.

With a vehicle 10 according to the invention, the user can combine the benefits of gymnastics provided by running on a treadmill with the pleasure and relaxation of a ride on a boat or paddleboat.

For example, combining the motor activity of running with the therapeutic qualities of iodine-rich air, which can be inhaled by going for a sea trip on a watercraft such as the vehicle 10, provides benefits not only in terms of acquisition of muscular tone for the lower limbs and of improvement of blood circulation, but also as regards the respiratory system, which is often afflicted by allergic rhinitides or other inflammations of the mouth, and the thyroid gland, which contains most of the iodine that is present in the human body.

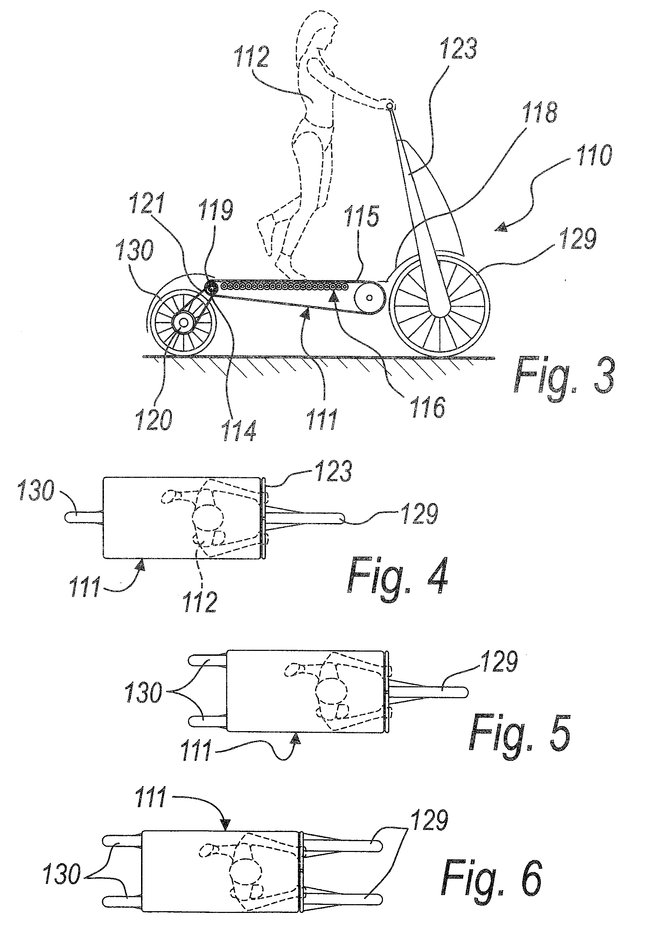

In a second embodiment, shown schematically in Figures 3 to 6, the vehicle according to the invention, here designated by the reference numeral 110, is instead suitable to circulate on land.

The vehicle 110 therefore comprises, rested on the ground, at least one front wheel 129 and at least one rear wheel 130.

Figure 4 illustrates a first variation of said second embodiment, in which there is a front wheel 129 and a rear wheel 130.

The travel means are constituted in this embodiment by the rear wheel 130 and the guiding (steering) means are constituted by a handlebar 123 for controlling the front wheel 129, as in known bicycles.

The wheels and the handlebar are rigidly coupled to the chassis, shown schematically by the line 118, and the supporting surface 116, on which the belt 115 slides and which supports the weight of the user 112, is also associated with said chassis.

The motion transmission means are constituted by a flexible transmission torque element 121, which is adapted to transmit the motion from a driving pulley or wheel 119, which is rigidly coupled and coaxial with respect to the shaft of the rear roller 114, to a driven wheel or pulley 120, which is coaxial and rigidly coupled to the shaft of the rear wheel 130.

In particular, the flexible torque transmission element 121 is a chain suitable to transmit motion from a driving gear 119, which is rigidly coupled and coaxial with respect to the shaft of the rear roller 114, to a driven gear 120, which is coaxial and rigidly coupled to the shaft of the rear wheel 130.

A second variation of the second embodiment 110 is shown in Figure 5, wherein the rear wheels 130 are two and the front wheel 129 is one, so as to form a sort of tricycle driven by the treadmill 111.

A third variation of the second embodiment is shown schematically in Figure 6.

In this third variation, two front wheels 129 and two rear wheels 130 are associated with the treadmill 111.

In practice it has been found that the invention thus described solves the aim and the the intended objects.

In particular, the present invention provides a muscle-powered vehicle which can be moved by means of the physical activity generally performed on a treadmill.

Moreover, the present invention provides a muscle-powered vehicle which can travel over land.

Moreover, the present invention provides a muscle-powered vehicle suitable for navigation.

Further, the present invention provides a muscle-powered vehicle which allows to obtain all the advantages for which treadmills are appreciated and widespread, such as for example the acquisition of muscular tone for the lower limbs (legs, calves and buttocks), the improvement of blood circulation, of cardiac and respiratory efficiency, and the reduction of fatty tissue, and further allows to have the benefits of outdoor physical activity.

Moreover, the present invention provides a muscle-powered vehicle which can be used easily in full safety even by a user who does not have particular prior training.

Moreover, the present invention provides a muscle-powered vehicle which can be manufactured cheaply with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2005A000181 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A muscle-powered vehicle, **characterized in that** it is constituted by a treadmill (11, 111), which is supported by a chassis (18, 118) and is adapted to be actuated by the thrust of the feet and legs of at least one user (12, 112) who walks or runs thereon, travel means (22, 130) for travel over land or on water being functionally connected to said treadmill (11, 111) by way of motion transmission means (19, 20, 21, 121, 119, 120), said vehicle (10, 110) being provided with guiding means (23, 30, 123) for directing its travel.

2. The vehicle according to claim 1, **characterized in that** said treadmill (11, 111) is constituted by at least two rollers, a first front roller (13,113) and a second rear roller (14, 114), which are surrounded by a belt (15, 115) which is stretched between said front roller (13, 113) and said rear roller (14, 114) and is walkable, the upper portion (15a) of said belt (15, 115) being able to slide on a supporting surface (16, 116) for said at least one user (12, 112) who walks or runs thereon, said belt (15, 115) being suitable to transmit the motion imparted thereto by the thrust of the feet of said at least one user (12,112) to said at least two front and rear rollers (13, 113, 14, 114).

3. The vehicle according to one or more of the preceding claims, **characterized in that** said supporting surface (16, 116) is provided by a plurality of contiguous bars (17), which support free rollers (17a), which form a sliding surface for the belt (15, 115) and for supporting the user (12, 112).

4. The vehicle according to one or more of the preceding claims, **characterized in that** said at least two rollers (13, 14, 113, 114) and said supporting surface (16, 116) are supported by the chassis (18), to which the travel means (22, 130) and the guiding means (23, 30, 123) are also rigidly coupled.

5. The vehicle according to one or more of the preceding claims, **characterized in that** said motion transmission means are of the flexible type and comprise at least one driving pulley or wheel (19), which is rigidly coupled to the rotation shaft of at least one of said front and rear rollers (13, 113, 14, 114) and at least one driven pulley (20), which is associated with said travel means (22) and is suitable to receive the driving torque by means of at least one flexible transmission element (21, 25), such as a belt, chain or other equivalent element.

6. The vehicle according to one or more of the preceding claims, **characterized in that** it is a watercraft, which comprises a floating structure which is fixed to the chassis (18), and the travel means of which are formed by at least one propulsion impeller (22).

7. The vehicle according to claim 6, **characterized in that** said guiding means are constituted by a handlebar (23) for steering a rudder (30).

8. The vehicle according to claims 6 and 7, **characterized in that** said floating structure is provided with two longitudinally elongated lateral floats (24).

9. The vehicle according to one or more of claims 6 to 8, **characterized in that** said motion transmission means comprise a first flexible transmission element (21) between a first driving pulley (19) and a first intermediate pulley (26), and a second flexible transmission element (25) between a second intermediate pulley (27), which is coaxial and rigidly coupled to the first intermediate pulley (26), and a driven pulley (20), which is keyed to the shaft (28) for actuating the impeller (22).

10. The vehicle according to claims 1 to 5, **characterized in that** it is adapted to travel over land and comprises, rested on the ground, at least one front wheel (129) and at least one rear wheel (130), said travel means being constituted by at least one (130) of said front and rear wheels (129, 130).

11. The vehicle according to claim 10, **characterized in that** said guiding means are constituted by a handlebar (123) for steering said at least one front wheel (129).

12. The vehicle according to claims 10 and 11, **characterized in that** said motion transmission means are constituted by a flexible transmission element (121), which is adapted to transmit motion from a driving pulley or wheel (119) which is rigidly coupled and coaxial with respect to the shaft of one of said front and rear rollers (113, 114), to a driven wheel or pulley (120), which is coaxial and rigidly coupled to the shaft of said at least one rear wheel (130), or to the shaft of said at least one front wheel (129).

13. The vehicle according to claims 10, 11 and 12, **characterized in that** said flexible transmission element (121) is a chain which is suitable to transmit motion from a driving gear (119), which is rigidly coupled and coaxial with respect to the shaft of one of said front and rear rollers (113, 114), to a driven gear (120), which is coaxial and rigidly coupled to the shaft of said at least one rear wheel (130).
